# EUROPEAN PATENT SPECIFICATION

(11) **EP 1 916 130 B1**
(45) Date of publication and mention of the grant of the patent: **24.02.2010**
(21) Application number: 07020846.7
(22) Date of filing: 24.10.2007
(51) Int. Cl.: B60G 99/00

(54) **Mount structure of vehicle body vibration damping apparatus**
Montageträger für die Vibrationsdämpfungsvorrichtung eines Fahrzeugaufbaus
Structure de montage d'appareil d'amortissement de vibrations de corps d'automobile

(30) Priority: 25.10.2006 JP 2006289678
(43) Date of publication of application: 30.04.2008
(73) Proprietor: Yamaha Hatsudoki Kabushiki Kaisha, Iwata-shi, Shizuoka-ken 438-8501 (JP)
(72) Inventor: Kondou, Katsuhiro, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 209 062
- WO-A-2006/090586
- US-A- 4 501 436
- US-A- 4 674 791

## Description

The present invention relates to a mount structure of a vehicle body vibration damping apparatus for mounting the vehicle body vibration damping apparatus to a body frame for damping vibration in a body frame, a body frame having such a mounting structure and to a method of assembly of a vehicle body frame.

Conventionally, an impact may be applied on a body frame of a vehicle from a suspension system during running. In this case, vibration may be generated in the body frame because of a symptom in which the suspension system is released immediately after momentarily compressed between two mount points.

If vibration is generated in the body frame as described above, ride comfort is remarkably deteriorated. Therefore, it is desirable that such vibration is not generated.

A conventional vehicle body vibration damping apparatus which can prevent a generation of vibration in a body frame is disclosed, for example, in Patent Document 1.

The vehicle body vibration damping apparatus disclosed in Patent Document 1 is formed in a shape of a rod in which damping force generation means for damping vibration by using elasticity of oil or rubber is provided in a middle section. The vehicle body vibration damping apparatus is spanned between parts on suspension systems forming a pair in the width direction of a vehicle.

In order to mount the vehicle body vibration damping apparatus to a vehicle body, a mount section provided on both ends of the vehicle body vibration damping apparatus is mounted to the side of the vehicle body by a dedicated mounting bolt directly or via a dedicated mount bracket. The part on the side of a vehicle body in which the vehicle body vibration damping apparatus is mounted includes an upper end of a pair of cushion units at the left and right sides of the suspension system, a body frame positioned in the vicinity of the upper end, and so forth.
Patent Document 1: JP-A-2002-211437

According to the mount structure of the vehicle body vibration damping apparatus disclosed in Patent Document 1, it is necessary to provide a specifically-designed mount space for mounting the mount section of the vehicle body vibration damping apparatus in the body frame. On the other hand, generally, a number of parts such as parts for a steering system and parts for a brake are closely disposed around a suspension system of a vehicle. Since the mount structure of the vehicle body vibration damping apparatus disclosed in Patent Document 1 requires to secure the mount space described above, there is a problem in which the mount positions of other parts provided around and in the vicinity of the suspension system is restricted.

In addition, when the vehicle body vibration damping apparatus is mounted to the side of the vehicle body by using the dedicated mount bracket, not only an occupied space is further enlarged by the space for the mount bracket, but also the manufacturing cost increases by the increment of the parts necessary for the mount bracket.

It is considered that a mounting bolt for the suspension system is used to tighten the suspension system with the vehicle body vibration damping apparatus to the body frame in order to compactly mount the vehicle body vibration damping apparatus to the side of the vehicle body and, further, in order to reduce the number of parts. However, the mount structure described above cannot correctly mount the vehicle body vibration damping apparatus to the side of the vehicle body. This is because the mounting bolt for mounting the suspension system to the body frame is tightened by high tightening torque in order that the suspension system may be mounted firmly on the vehicle body.

The torque at a time when the mounting bolt is tightened is transmitted to the mount section of the vehicle body vibration damping apparatus by friction. Accordingly, the force in the direction of rotation around the end through which the mounting bolt penetrates is applied to the vehicle body vibration damping apparatus. As both ends the vehicle body vibration damping apparatus is mounted to the side of the vehicle body by the mounting bolt, the high tightening torque is applied to the both ends of the vehicle body vibration damping apparatus.

In other words, as the mounting bolt is tightened with high fixing torque, the force in the direction in which the vehicle body vibration damping apparatus is sheared is applied on the vibration damping equipment for a vehicle from the both ends thereof. Consequently, the vehicle body vibration damping apparatus is mounted to the vehicle body in a state in which the vehicle body vibration damping apparatus is unnecessarily distorted. As a result, the vehicle body vibration damping apparatus cannot be correctly mounted to the side of the vehicle body as described above. This is critical for the vehicle body vibration damping apparatus, the stroke of which is at the order of micron.

This problem may be solved by providing a rotation stopper member to the side of the vehicle body for stopping the rotation of the vehicle body vibration damping apparatus. However, it is required to form a large and strong rotation stopper member in order to prevent the rotation of the vehicle body vibration damping apparatus in resistance to the high fixing torque applied to the mounting bolt. As a result, contrary to the original intention, the mount structure may become larger.

An object of the present invention made in view of such problem described above is to provide a mount structure of a vehicle body vibration damping apparatus for correctly mounting the vehicle body vibration damping apparatus to the side of a vehicle body while the structure thereof is compact and has a small number of parts, and a method for assembly of a vehicle body frame with such a vibration damping apparatus.

This objective is solved in an inventive manner by a mount structure of a vehicle body vibration damping apparatus for mounting the vehicle body vibration damping apparatus to a vehicle body, said vehicle body vibration damping apparatus comprising a hydraulic damping force generation means formed in an elongated shape for generating damping force with respect to deformation in its longitudinal direction, and a mount section for mounting both ends of the hydraulic damping force generation means, in particular to a bottom section of a vehicle body frame, said mount structure including a head of a mounting bolt for mounting an attached component to the body frame, which is formed with an extended section extending on an axis of the mounting bolt in the direction opposite to the vehicle body frame, wherein the mount section is mounted to the extended section.

Preferably, a male screw is formed on the extended section, and the mount section of the vehicle body vibration damping apparatus is mounted to the male screw.

Further, preferably the attached component is a suspension system, the mounting bolt is for mounting the suspension system to the body frame, and both ends of the vehicle body vibration damping apparatus are mounted to the mounting bolts provided on both ends in the width direction of the vehicle.

Still further, preferably the attached component is a reinforcing member spanned between two points of the body frame, the mounting bolt is for mounting the reinforcing member to the body frame, and both ends of the vehicle body vibration damping apparatus are mounted to the mounting bolts provided on both ends in the width direction of the vehicle.

According to a further preferred embodiment, the mount structure further comprises a mount member for mounting an attached component to the vehicle body frame, said mount member being fitted with the attached component, wherein the mounting bolt penetrates and mounts the mount member to the vehicle body frame, and wherein said mounting bolt comprising the extended section on a side opposite to the vehicle body frame, said extended section being configured for mounting a vehicle body vibration damping apparatus.

Therein, it is further preferable if said mount member includes an outer cylinder fitted with the attached component, an inner cylinder disposed inside the outer cylinder in a position coaxial with the outer cylinder, and a damper rubber interposed between the outer cylinder and the inner cylinder.

There is further provided a vehicle body frame comprising a mount structure according to one of the above embodiments.

The objective above is further solved by a method for assembly of a vehicle body frame, comprising the steps of: mounting an attached component, in particular a front end of the front suspension member, a rear and of the rear suspension member, and/or a front end of the rear stability brace, to a vehicle body frame, in particular to a bottom section of the body frame, by a mounting structure according to one of the above embodiments, with a tightening torque for the mounting bolt set to the amount for fixing the attached components to the vehicle body frame, and mounting the vehicle body vibration damping apparatus to the mounting bolt for mounting the attached components to the bottom section of the body frame, with a tightening torque smaller than the tightening torque at a time when mounting the attached components.

In the following, the present invention is explained in greater detail with respect to several embodiments thereof in conjunction with the accompanying drawings, wherein:
- FIG. 1: shows a bottom plan view illustrating the constitution of a vehicle provided with the vehicle body vibration damping apparatus according to the present teaching,
- FIG. 2: shows a front view illustrating a state in which the vehicle body vibration damping apparatus is mounted to the body frame,
- FIG. 3: is a cross-sectional view taken along a line III-III in FIG. 2,
- FIG. 4: is a perspective view illustrating an example in which the vehicle body vibration damping apparatus is mounted to the mounting bolts for mounting the suspension,
- FIG. 5: shows a perspective view illustrating an example in which the vehicle body vibration damping apparatus is mounted to the both of the mounting bolts for mounting the rear wheel suspension and the mounting bolts for mounting the rear stability braces, and
- FIG. 6: is a perspective view illustrating a state of the vehicle body vibration damping apparatus mounted to the mounting bolts for mounting the rear wheel suspension viewed from the bottom of the vehicle body.

### Description of Reference Numerals and Symbols:

- 1:: monocoque body
- 11:: front suspension member
- 22:: floor panel
- 24:: head
- 24a:: extended section
- 25:: threaded section
- 27:: male screw
- 31:: rear suspension member
- 37:: rear stability brace
- 42, 43:: mount bracket
- 45:: hydraulic damper
- 47:: extension rod

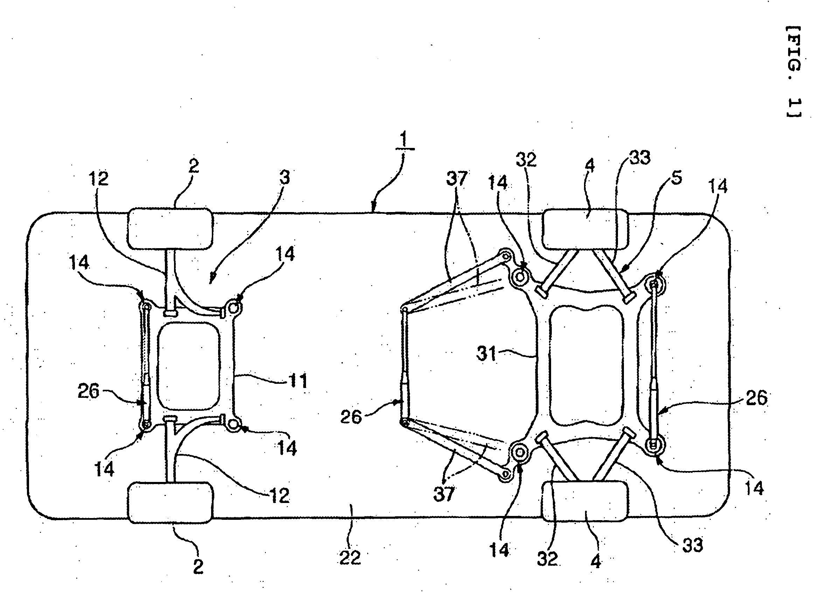

An embodiment of the mount structure of the vehicle body vibration damping apparatus according to the present teaching will be described in detail hereinafter with reference to FIG. 1 to FIG. 6.

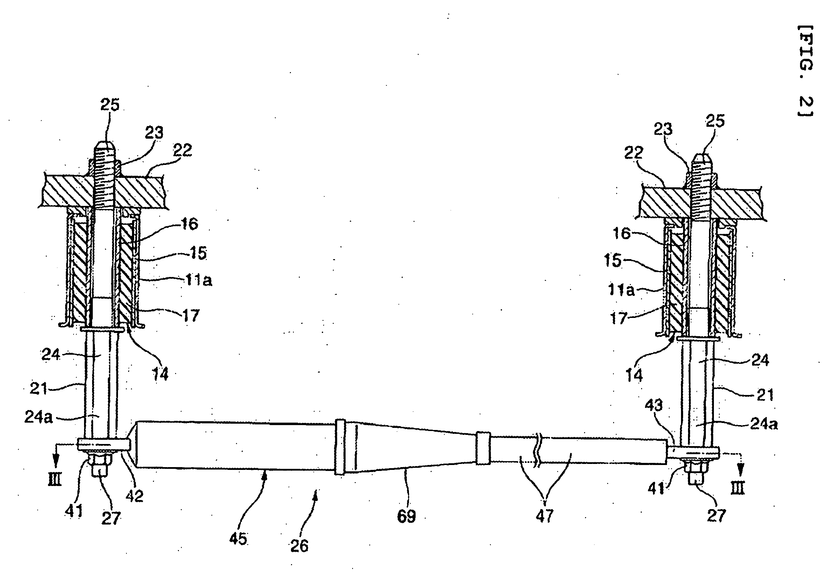

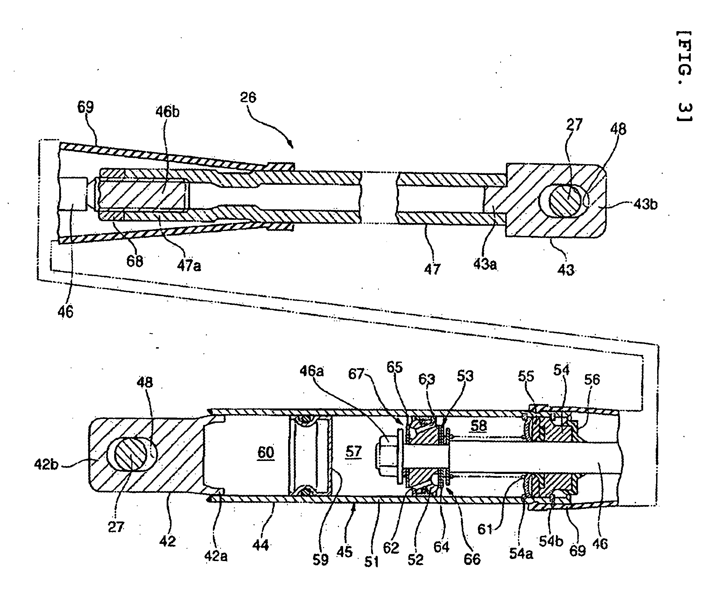

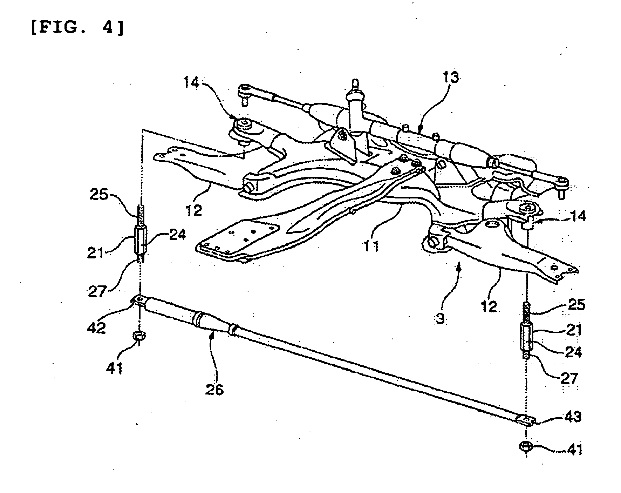

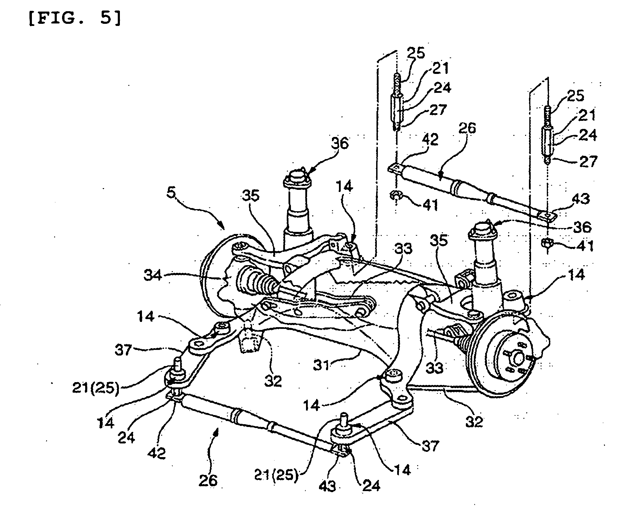

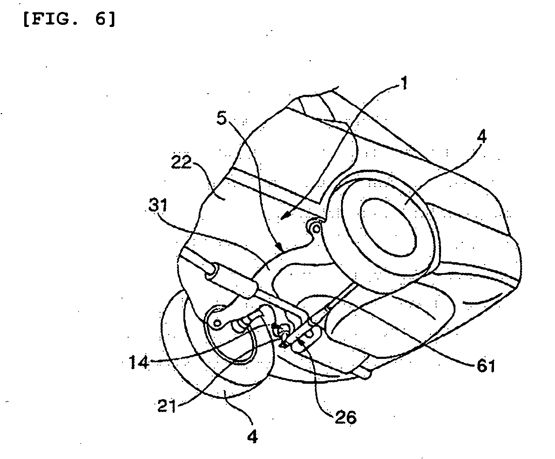

FIG. 1 shows a bottom plan view illustrating the constitution of a vehicle provided with the vehicle body vibration damping apparatus according to the present teaching. FIG. 2 shows a front view illustrating a state in which the vehicle body vibration damping apparatus is mounted to a body frame. This drawing shows partly cross-sectional views of members on the side of the body frame. FIG. 3 is a cross-sectional view taken along a line 111-111 in FIG. 2. FIG. 4 is a perspective view illustrating an example in which the vehicle body vibration damping apparatus is mounted to mounting bolts for mounting a front wheel suspension. FIG. 5 shows a perspective view illustrating an example in which the vehicle body vibration damping apparatus is mounted on both of mounting bolts for mounting a rear wheel suspension and mounting bolts for mounting rear stability braces. FIG. 6 is a perspective view illustrating a state of the vehicle body vibration damping apparatus mounted to the mounting bolts for mounting the rear suspension system viewed from the bottom of the vehicle body.

In the drawings, a reference numeral 1 denotes a monocoque body as a body frame of a vehicle. The monocoque body 1 is formed by welding and combining a plurality of board materials and pipes having pressed to form.

A front wheel suspension 3 having front wheels 2 is provided in the front end of the monocoque body 1. On the other hand, a rear wheel suspension 5 having rear wheels 4 is provided in the rear end of the monocoque body 1.

The front wheel suspension 3 is a well-known double wishbone type. As shown in FIG. 1 and FIG. 4, the front wheel suspension 3 includes a front suspension member 11 as one of attached components of the present embodiments, a pair of lower control arms 12 at the left and the right sides supported swingably in the vertical direction by the front suspension member 11, a pair of knuckles, upper arms, and cushion units at the left and the right sides (not shown), and so forth.

A power steering system 13 is mounted above the front suspension member 11 shown in FIG. 4.

The front suspension member 11 forms a frame for supporting parts included by the front wheel suspension 3. Mount members 14 for mounting the front suspension member 11 to the monocoque body 1 are provided on the both ends in the width direction of the vehicle at the end of the front side of the vehicle body of the front suspension member 11 and on the both ends in the width direction of the vehicle at the end of the rear side of the vehicle body respectively.

As shown in FIG. 2, the mount member 14 includes an outer cylinder 15 fitted with and welded to a connection cylinder 11 a provided on the front suspension member 11, an inner cylinder 16 disposed inside the outer cylinder 15 in a position coaxial with the outer cylinder 15, and a damper rubber 17 interposed between the outer cylinder 15 and the inner cylinder 16.

As shown in FIG. 2, two mount members 14 and 14 positioned on the front side of the vehicle body among the four mount members 14 are mounted on a floor panel 22 included in the bottom section of the monocoque body 1 by a mounting bolt 21 described below. The mounting bolt 21 passes through the mount member 14 and is screwed in a nut 23 welded on the upper surface of the floor panel 22.

An extended section 24a extended on the side opposite to a threaded section 25 on the axial line of the mounting bolt 21 is provided integrally with a head 24 of the mounting bolt 21. The head 24 is longer than heads of conventional bolts. The cross section of the head 24 according to the embodiment is in a shape of a hexagon. A male screw 27 for mounting vehicle body vibration damping apparatus 26 described below is coaxially formed on the extended section 24a of the head 24. The cross section of the head 24 is not limited to a hexagon. Any shape is possible as long as a tightening tool (not shown) is engaged with the shape.

Two mount members 14 and 14 positioned on the rear side of the vehicle body not shown in the drawing among the four mount members 14 are mounted on the floor panel 22 by a conventional bolt having the head 24 shorter than the head 24 of the mounting bolt 21.

In other words, the front suspension member 11 is mounted on the lower surface of the floor panel 22 by four mount members 14, two mounting bolts 21, and two conventional bolts (not shown).

The rear wheel suspension 5 is a well-known double wishbone type. As shown in FIG. 1 and FIG. 6, the rear wheel suspension 5 includes a rear suspension member 31, a front lower control arm 32, a rear lower arm 33, a knuckle 34, an upper arm 35, a rear cushion unit 36, and so forth.

The rear suspension member 31 forms a frame for supporting parts included by the rear wheel suspension 5. The mount members 14 for mounting the rear suspension member 31 to the monocoque body 1 are provided on the both ends in the width direction of the vehicle at the end of the front side of the vehicle body of the rear suspension member 31 and on the both ends in the width direction of the vehicle at the end of the rear side of the vehicle body respectively. The mount members 14 have a structure the same as that of the mount members 14 shown FIG. 2.

As shown in FIG. 2, the two mount members 14 positioned on the rear side of the vehicle body among the four mount members 14 for the rear wheel suspension are mounted on the floor panel 22 by the mounting bolt 21. In other words, the rear end of the rear suspension member 31 is mounted on the floor panel 22 by the mount structure the same as that of the front end of the front suspension member 11. Therefore, the vehicle body vibration damping equipment 26 described below is mounted also to the two mounting bolts 21 and 21 for mounting the rear end of the rear suspension member 31 to the floor panel 22.

The two mount members 14 and 14 positioned on the front side of the vehicle body among the four mount members 14 for the rear wheel suspension are mounted to the floor panel 22 by a conventional bolt having the head 24 shorter than the head 24 of the mounting bolt 21, which is not shown in the drawing. The rear end of a rear stability brace 37 as the reinforcing member of the teaching according to the third embodiment is mounted on the lower surface of a pair of the front ends at the left and the right sides of the rear suspension member 31 provided with the two mount members 14 respectively.

The rear stability braces 37 and 37 connect the front end of the rear suspension member 31 and the part in the front direction detached from the front end of the rear suspension member 31 on the floor panel 22. Thus, the rear stability braces 37 and 37 improve the mount rigidity of the rear suspension member 31 and the rigidity of the floor panel 22 around the rear suspension member 31. The front ends of the rear stability braces 37 and 37 are mounted on the floor panel 22 by the mount structure shown in FIG. 2.

Specifically, the front end of the rear stability brace 37 is provided with the mount member 14 and mounted to the floor panel 22 by the mount member 14 and the mounting bolt 21 penetrating through the mount member 14. The vehicle body vibration damping apparatus 26 described below is mounted also to the mounting bolt 21. The rear end of the rear stability brace 37 can be mounted to the lower end of the mounting bolt 21 by mounting the front end of the rear suspension member 31 to the floor panel 22 by the mounting bolt 21. In this case, the rear stability brace 37 is disposed in a position indicated by chain double-dashed lines in FIG. 1.

As shown in FIG. 2 and FIG. 3, the vehicle body vibration damping apparatus 26 includes mount brackets 42 and 43 mounted by tightening a nut 41 to the two mounting bolts 21, a hydraulic damper 45 having a hydraulic cylinder 44 with one end welded to the mount bracket 42 on one side (on the left side in FIG. 2) between the mount brackets 42 and 43, and an extension rod 47 for connecting a piston rod 46 of the hydraulic damper 45 and the mount bracket 43 on the other side. The vibration damping equipment 26 is formed in a longer shape as a whole. The mount section according to the present embodiments is constituted by the mount brackets 42 and 43, while the hydraulic damping force generation means is constituted by the hydraulic damper 45.

As shown in FIG. 3, the mount brackets 42 and 43 include fitting sections 42a and 43a fitted with and welded to the hydraulic cylinder 44 or the extension rod 47, and plate sections 42b and 43b mounted to the mounting bolt 21. A through hole 48 in which the male screw 27 of the mounting bolt 21 is inserted is formed in the plate sections 42b and 43b. The through hole 48 is formed with a long hole longer in the longitudinal direction of the vehicle body vibration damping apparatus 26 in order that a manufacturing error and an assembly error concerning the mounting bolt 21 may be canceled.

As shown in FIG. 3, the hydraulic damper 45 includes the hydraulic cylinder 44 having a cylinder tube 51 with one end closed by the mount bracket 42 on one side and a throttle 53 provided on a piston 52 of the hydraulic cylinder 44.

One end of the cylinder tube 51 is closed by the mount bracket 42 on the one side welded thereto. The other end of the cylinder tube 51 is closed by a rod guide 54 supporting the piston rod 46 freely movably. The rod guide 54 is fitted in the cylinder tube 51 and fixed on the cylinder tube 51 by circlips 54a and 54b.

Seal members 55 and 56 for sealing a part through which the piston rod 46 passes through are provided on both ends in the axial direction of the rod guide 54.

The cross section of the piston 52 is formed in a shape of a circle to be fitted in the cylinder tube 51. The piston 52 defines a first oil chamber 57 and a second oil chamber 58 in the cylinder tube 51 and, further, is fixed on the piston rod 46 passing through the axis center by a fixing nut 46a.

The first oil chamber 57 is formed between the piston 52 and a free piston 59 movably fitted in the cylinder tube 51. The free piston 59 defines one end of the cylinder tube 51 in to the first oil chamber 57 and a high-pressure gas chamber 60. High-pressure N2 gas is filled in the high-pressure gas chamber 60.

The piston 52 is urged in the direction in which the hydraulic cylinder 44 is retracted by a compression coil spring 61 elastically attached between the piston 52 and the rod guide 54. The compression coil spring 61 counterbalances gas reaction force applied from hydraulic fluid in the cylinder tube 51 to the piston 52. The gas reaction force is generated because pressure receiving surface area on the side of the second oil chamber 58 is smaller than pressure receiving surface area on the side of the first oil chamber 57 of the piston 52.

In the hydraulic damper 45 of the embodiment, the free length is the length in a state in which the gas reaction force is canceled and balanced by the elastic force of the compression coil spring 61. The pressure of the N2 gas in the hydraulic damper 45 is adjusted in order that the free length corresponds to the mounting dimension on the vehicle body.

As the free length corresponds to the mounting dimension on the vehicle body, the initial load of the hydraulic damper 45 mounted on the vehicle body is zero. Accordingly, even if a little load is applied, the hydraulic damper 45 is immediately compressed in good response, and damping force is generated.

The throttle 53 provided on the piston 52 has a structure the same as the structure used for a shock absorber for a suspension system and so forth. The throttle 53 is constituted by a first and a second check valves 66 and 67 provided with leaf springs 64 and 65 for opening and closing the opening on one end of connecting holes 62 and 63 drilled in the piston 52. The leaf springs 64 and 65 are formed in a shape of a ring, and the inner circumferences thereof are fixed on the piston 52 in a state in which a plurality of leaf springs is stacked.

The first check valve 66 generates damping force when hydraulic fluid flows from the first oil chamber 57 to the second oil chamber 58 in one direction against to the elastic force of the leaf spring 64. The second check valve 67 generates damping force when hydraulic fluid flows from the second oil chamber 58 to the first oil chamber 57 in one direction against the elastic force of the leaf spring 65.

The extension rod 47 for connecting the end of the piston rod 46 and the mount bracket 43 on the other side is formed with a pipe, and one end thereof is screwed in the end of the piston rod 46, while the other end thereof is welded to the mount bracket 43 on the other end.

A male screw 46b formed on the piston rod 46 is screwed in a female screw 47a on the extension rod 47 in the joint section of the extension rod 47 and the piston rod 46. Accordingly, the structure is employed such that the overall length is arbitrarily adjusted, and the joint section is tightened by a lock nut 68.

As shown in FIG. 3, the threaded section is covered with a rubber boot 69 provided for connecting the extension rod 47 and the cylinder tube 51. The rubber boot 69 is for preventing muddy water and dust from adhering to the piston rod 46. This rubber boot 69 is formed in a shape of a cylindrical cone, and one end thereof is fixed on the outer circumference of the cylinder tube 51, while the other end thereof is fixed on the outer circumference of the extension rod 47.

The installation of the vehicle body vibration damping apparatus 26 constituted as described above to the monocoque body 1 is completed by mounting the front end of the front suspension member 11, the rear and of the rear suspension member 31, and the front end of the rear stability brace 37 to the mounting bolt 21 for mounting the floor panel 22. Specifically, the front end of the front suspension member 11, the rear and of the rear suspension member 31, the front end of the rear stability brace 37, and so forth are mounted to the floor panel 22 by the mounting bolt 21 in advance. At this time, the tightening torque for the mounting bolt 21 is set to the amount which can surely fix each of the components to the floor panel 22.

Then, the male screw 27 at the lower end of the mounting bolt 21 is inserted in the through hole 48 in the mount brackets 42 and 43 of the vehicle body vibration damping apparatus 26. The nut 41 is tightened on the male screw 27 via a washer or the like (not shown). As the nut 41 is tightened, the plate sections 42b and 43b of the mount brackets 42 and 43 are pressed on the head 24 having a cross section in a shape of a hexagon from the lower side and fixed there. The installation of the vehicle body vibration damping apparatus 26 to the side of the vehicle body is completed by tightening the nut 41 on the male screw 27 of the mounting bolt 21 as described above.

The tightening torque at a time when the nut 41 is tightened on the male screw 27 is smaller than the tightening torque at a time when the mounting bolt 21 is tightened on the nut 23 of the floor panel 22. Therefore, the tightening torque is optimal for fixing the vehicle body vibration damping apparatus 26.

The vehicle body vibration damping apparatus 26 is fixed in regard to the floor panel 22 in a position spaced downward from the floor panel 22 while extended in the width direction of the vehicle by mounting the vehicle body vibration damping apparatus 26 to the mounting bolt 21 as described above.

Since the vehicle body vibration damping apparatus 26 is disposed in a position spaced downward from the floor panel 22, interference with an exhaust pipe 71 crossing the rear suspension member 31 in the longitudinal direction of the vehicle body can be avoided as shown in FIG. 6. The rear stability brace 37 is omitted from FIG. 6.

The vehicle body vibration damping apparatus 26 illustrated in the embodiment is mounted to the mounting bolt 21 for mounting the attached components such as the front suspension member 11, the rear suspension member 31, and the rear stability brace 37 to the floor panel 22 (the bottom section of the body frame). Consequently, the vehicle body vibration damping apparatus 26 can be mounted to side of the vehicle body more compactly than the case in which the vehicle body vibration damping apparatus 26 is mounted to the attached component or in the vicinity of the attached component directly or via a dedicated bracket.

When the vehicle body vibration damping apparatus 26 is mounted to the side of the vehicle body, necessary dedicated parts are solely two washers and two nuts 41 and 41. Any dedicated bracket, dedicated mounting bolt 21, or the like is not necessary. According to the embodiment, when the vehicle body vibration damping apparatus 26 is mounted to the side of the vehicle body (the body frame), the number of necessary parts can be decreased in comparison to the conventional mount structure.

The vehicle body vibration damping apparatus 26 is mounted to the mounting bolt 21 having mounted the attached component to the floor panel 22. In other words, tightening of the mounting bolt 21 on the nut 23 on the side of the floor panel 22 is performed separately from tightening of the nut 41 on the mounting bolt 21. Accordingly, even though the attached components such as the front suspension member 11, the rear suspension member 31, the rear stability brace 37, and the like and the vehicle body vibration damping apparatus 26 are mounted to the floor panel 22 by one mounting bolt 21 in the mount structure, the tightening torque for mounting the vehicle body vibration damping apparatus 26 can be set to an appropriate amount.

As a result, according to the mount structure in the embodiment, the vehicle body vibration damping apparatus 26 can be correctly mounted to the floor panel 22 while deformation of the vehicle body vibration damping equipment 26 caused by transmission of high tightening torque is prevented.

Consequently, according to the embodiment, the vehicle body vibration damping apparatus 26 can be correctly mounted to the side of the vehicle body in the compact structure including a small number of parts.

According to the embodiment, the vehicle body vibration damping apparatus 26 is mounted to a pair of the mounting bolts 21 and 21 on the left and on the right sides for mounting the front suspension member 11 and the rear suspension member 31 to the monocoque body 1. Therefore, vibration generated in the monocoque body 1 from the front wheel suspension 3 and the rear wheel suspension 5 as a vibration source can be damped by the vehicle body vibration damping apparatus 26.

Further, according to the embodiment, the vehicle body vibration damping apparatus 26 is mounted to a pair of the mounting bolts 21 and 21 on the left and on the right sides for mounting the front end of the rear stability brace 37 to the monocoque body 1. Therefore, the vehicle body vibration damping apparatus 26 can be firmly mounted to the monocoque body 1. Consequently, vibration generated in the monocoque body 1 can be surely damped.

The description above discloses, in order to achieve the purpose, the mount structure of the vehicle body vibration damping apparatus according to the present embodiment is a mount structure of the vehicle body vibration damping apparatus for mounting the vehicle body vibration damping apparatus formed with hydraulic damping force generation means formed in a long shape for generating damping force with respect to deformation in the longitudinal direction and a mount section for mounting both ends of the hydraulic damping force generation means to a member on a side of a vehicle body to a body frame in a bottom section of a vehicle in which an extended section is provided on a head of a mounting bolt for mounting an attached component to the bottom section of the body frame extending on an axis of the mounting bolt in the direction opposite to a threaded section, and a male screw is formed on the extended section, and the mount section of the vehicle body vibration damping apparatus is mounted to the male screw.

### (Embodiment 1)

The mount structure of a vehicle body vibration damping apparatus according to a second embodiment is the mount structure of the vehicle body vibration damping apparatus according to the first embodiment in which the attached component is a suspension system, the mounting bolt is for mounting the suspension system to the body frame, and one end and the other end of the vehicle body vibration damping apparatus are mounted to the mounting bolts provided on one end and the other end in the width direction of the vehicle.

The mount structure of the vehicle body vibration damping apparatus according to a third embodiment is the mount structure of the vehicle body vibration damping apparatus according to the first embodiment in which the attached component is a reinforcing member spanned between two points of the body frame, the mounting bolt is for mounting the reinforcing member to the body frame, and one end and the other end of the vehicle body vibration damping apparatus are mounted to the mounting bolts provided on one end and the other end in the width direction of the vehicle.

### Effect of the Present Embodiments:

According to the present teaching, the vehicle body vibration damping apparatus is substantially mounted to the mounting bolt having mounted the attached component to the bottom section of the body frame. Accordingly, the vehicle body vibration damping apparatus can be mounted on the side of the vehicle body more compactly than the case in which the vehicle body vibration damping apparatus is mounted to the attached component or in the vicinity of the attached component directly or via a bracket.

In addition, when the vehicle body vibration damping apparatus is mounted to the side of the vehicle body, necessary dedicated parts are two nuts with some other auxiliary parts if necessary. Any dedicated bracket or dedicated mounting bolt is not necessary at all. Therefore, according to the present teaching, when the vehicle body vibration damping apparatus is mounted on the body frame, the number of parts is smaller than that of the conventional mount structure.

The tightening torque at a time when the mounting bolt is tightened on the body frame is applied to the head of the mounting bolt and the threaded section positioned on the side of the body frame. The tightening torque is not applied to the male screw for mounting the vehicle body vibration damping apparatus. Accordingly, even though the present teaching is the mount structure for mounting the attached component and the vehicle body vibration damping apparatus to a body frame by one mounting bolt, the tightening torque for mounting the vehicle body vibration damping apparatus can be set to an appropriate amount. Consequently, the vehicle body vibration damping apparatus can be mounted to a body frame in a correct mount state without deforming the vehicle body vibration damping apparatus by the high tightening torque.

Therefore, according to the present teaching, it is possible to provide the mount structure of the vehicle body vibration damping apparatus for correctly mounting the vehicle body vibration damping apparatus to the side of the vehicle body while the structure is compact and has a small number of parts.

According to the second embodiment of the present teaching, the vehicle body vibration damping apparatus can be mounted to a pair of the mounting bolts at the left and at the right sides for mounting the suspension system to the body frame. Consequently, vibration generated in the frame from the suspension system as a vibration source can be damped by the vehicle body vibration damping apparatus.

According to the third embodiment of the present teaching, the vehicle body vibration damping apparatus can be mounted to a pair of the mounting bolts at the left and at the right sides for mounting the reinforcing member for the body frame to the body frame. Consequently, the vehicle body vibration damping apparatus can be mounted to the body frame firmly. As a result, vibration generated in the body frame can be surely damped.

The description further discloses, in order to provide a mount structure of a vehicle body vibration damping apparatus for correctly mounting the vehicle body vibration damping apparatus to the side of the vehicle body while the structure is compact and has a small number of parts, an embodiment having an extended section 24a provided on a head 24 of a mounting bolt 21 for mounting attached components such as a front suspension member 11, a rear suspension member 31, and a rear stability brace 37 to a floor panel 22 of a monocoque body 1, the extended section 24a being formed to be extended on the side opposite to a threaded section 25 on the axis of the mounting bolt 21, a male screw 27 being formed on the extended section 24a, and mount brackets 42 and 43 of the vehicle body vibration damping apparatus 26 being mounted to the male screw 27.

The description further discloses, according to a preferred first aspect, a mount structure of a vehicle body vibration damping apparatus for mounting the vehicle body vibration damping apparatus formed with hydraulic damping force generation means formed in a long shape for generating damping force with respect to deformation in the longitudinal direction, and a mount section for mounting both ends of the hydraulic damping force generation means on a member on a side of a vehicle body to a body frame in a bottom section of a vehicle, wherein an extended section is provided on a head of a mounting bolt for mounting an attached component to the bottom section of the body frame extending on an axis of the mounting bolt in the direction opposite to a threaded section, a male screw is formed on the extended section, and the mount section of the vehicle body vibration damping apparatus is mounted to the male screw.

Preferably, according to a preferred second aspect, the attached component is a suspension system, the mounting bolt is for mounting the suspension system to the body frame, and one end and the other end of the vehicle body vibration damping apparatus are mounted to the mounting bolts provided on one end and the other end in the width direction of the vehicle.

Further preferably, according to a preferred third aspect, the attached component is a reinforcing member spanned between two points of the body frame, the mounting bolt is for mounting the reinforcing member to the body frame, and one end and the other end of the vehicle body vibration damping apparatus are mounted to the mounting bolts provided on one end and the other end in the width direction of the vehicle.

## Claims

1. Mount structure of a vehicle body vibration damping apparatus for mounting the vehicle body vibration damping apparatus (26) to a vehicle body (1),
said vehicle body vibration damping apparatus (26) comprising a hydraulic damping force generation means (45) formed in an elongated shape for generating damping force with respect to deformation in its longitudinal direction, and a mount section (42,43) for mounting both ends of the hydraulic damping force generation means (45), in particular to a bottom section (22) of a vehicle body frame,
said mount structure including a head (24) of a mounting bolt (21) for mounting an attached component (11,13) to the body frame (1), which is formed with an extended section (24a) extending on an axis of the mounting bolt (21) in the direction opposite to the vehicle body frame, wherein the mount section (42,43) is mounted to the extended section (24a).

2. Mount structure of a vehicle body vibration damping apparatus according to claim 1, wherein a male screw (27) is formed on the extended section (24a), and the mount section (42,43) of the vehicle body vibration damping apparatus (26) is mounted to the male screw (27).

3. Mount structure of a vehicle body vibration damping apparatus according to claim 1 or 2, wherein the attached component is a suspension system (11,13), the mounting bolt (21) is for mounting the suspension system (11,13) to the body frame (1), and both ends of the vehicle body vibration damping apparatus (26) are mounted to the mounting bolts (21) provided on both ends in the width direction of the vehicle.

4. Mount structure of a vehicle body vibration damping apparatus according to one of the claims 1 to 3, wherein the attached component is a reinforcing member (37) spanned between two points of the body frame, the mounting bolt (21) is for mounting the reinforcing member (37) to the body frame, and both ends of the vehicle body vibration damping apparatus (26) are mounted to the mounting bolts (21) provided on both ends in the width direction of the vehicle.

5. Mount structure according to one of the claims 1 to 4, having a mount member (14) for mounting an attached component (11,13,37) to the vehicle body frame, said mount member, (14) being fitted with the attached component, wherein the mounting bolt (21) penetrates and mounts the mount member (14) to the vehicle body frame (1), and wherein said mounting bolt (21) comprising the extended section (24a) on a side opposite to the vehicle body frame (1), said extended section (24a) being configured for mounting a vehicle body vibration damping apparatus.

6. Mount structure according to claim 5, wherein said mount member (14) includes an outer cylinder (15) fitted with the attached component, an inner cylinder (16) disposed inside the outer cylinder (15) in a position coaxial with the outer cylinder (15), and a damper rubber (17) interposed between the outer cylinder (15) and the inner cylinder (16).

7. Vehicle body frame comprising a mount structure according to one of the claims 1 to 6.

8. Method for assembly of a vehicle body frame according to claim 7, comprising the steps of:
mounting an attached component, in particular a front end of the front suspension member (11), a rear and of the rear suspension member (31), and/or a front end of the rear stability brace (37), to a vehicle body frame, in particular to a bottom section of the body frame, by a mounting structure according to one of the claims 1 to 6, with a tightening torque for the mounting bolt (21) set to the amount for fixing the attached components to the vehicle body frame,
mounting the vehicle body vibration damping apparatus (26) to the mounting bolt (21) for mounting the attached components to the bottom section of the body frame, with a tightening torque smaller than the tightening torque at a time when mounting the attached components.

## Patentansprüche

1. Montageaufbau einer Fahrzeugkarosserie- Schwingungsdämpfungsvorrichtung zum Befestigen der Fahrzeugkarosserie- Schwingungsdämpfungsvorrichtung (26) an einer Fahrzeugkarosserie (1),
wobei die Fahrzeugkarosserie- Schwingungsdämpfungsvorrichtung (26) aufweist eine hydraulische Dämpfungskraft- Erzeugungseinrichtung (45), gebildet in einer langgestreckten Form zum Erzeugen einer Dämpfungskraft in Bezug auf die Verformung in ihrer Längsrichtung, und einen Montageabschnitt (42, 43) zum Befestigen beider Enden der hydraulischen Dämpfungskraft- Erzeugungseinrichtung (45); insbesondere an einem Bodenabschnitt (22) eines Fahrzeugkarosserierahmens,
wobei der Montageaufbau einen Kopf (24) einer Montageschraube (21) zum Befestigen eines verbundenen Bauteils (11, 13) an dem Fahrzeugkarosserierahmen (1) enthält, der mit einem verlängerten Abschnitt (24a) gebildet ist, der sich auf einer Achse der Montageschraube (21) in der Richtung gegenüberliegend zu dem Fahrzeugkarosserierahmen erstreckt, wobei der Montageabschnitt (42, 43) an dem verlängerten Abschnitt (24a) befestigt ist.

2. Montageaufbau einer Fahrzeugkarosserie- Schwingungsdämpfungsvorrichtung nach Anspruch 1, wobei eine Schraube (27) an dem verlängerten Abschnitt (24a) gebildet ist und der Montageabschnitt (42, 43) der Fahrzeugkarosserie- Schwingungsdämpfungsvorrichtung (26) an der Schraube (27) befestigt ist.

3. Montageaufbau einer Fahrzeugkarosserie- Schwingungsdämpfungsvorrichtung nach Anspruch 1 oder 2, wobei das verbundene Bauteil ein Aufhängungssystem (11, 13) ist, die Montageschraube (21) zum Befestigen des Aufhängungssystems (11, 13) an dem Fahrzeugkarosserierahmen (1) dient und beide Enden der Fahrzeugkarosserie- Schwingungsdämpfungsvorrichtung (26) an den Montageschrauben (21), vorgesehen an beiden Enden, in der Richtung der Breite des Fahrzeuges, befestigt sind.

4. Montageaufbau einer Fahrzeugkarosserie- Schwingungsdämpfungsvorrichtung nach einem der Ansprüche 1 bis 3, wobei das verbundene Bauteil ein Verstärkungsteil (37) ist, gespannt zwischen zwei Punkten des Karosserierahmens, die Montageschraube (21) zum Montieren des Verstärkungsteils (37) an dem Karosserierahmen dient und beide Enden der Fahrzeugkarosserie- Schwingungsdämpfungsvorrichtung (26) an den Montageschrauben (21), vorgesehen an beiden Enden in der Richtung der Breite des Fahrzeuges, befestigt sind.

5. Montageaufbau nach einem der Ansprüche 1 bis 4, der ein Montageteil (14) zum Befestigen eines verbundenen Bauteils (11, 13, 37) an dem Fahrzeugkarosserierahmen hat, wobei das Montageteil (14) in das verbundene Bauteil eingesetzt ist,
wobei die Montageschraube (21) das Montageteil (14) durchdringt und an dem Fahrzeugkarosserierahmen (1) befestigt und wobei die Montageschraube (21) den verlängerten Abschnitt (24a) auf einer Seite gegenüberliegend zu dem Fahrzeugkarosserierahmen (1) aufweist, wobei der verlängerte Abschnitt (24a) zum Befestigen einer Fahrzeugkarosserie- Schwingungsdämpfungsvorrichtung konfiguriert ist.

6. Montageaufbau nach Anspruch 5, wobei das Montageteil (14) einen Außenzylinder (15) enthält, eingesetzt in das verbundene Bauteil, einen Innenzylinder (16), angeordnet innerhalb des Außenzylinders (15) in einer Position, die zu dem Außenzylinder (15) koaxial ist, und einen Dämpfungsgummi (17), eingesetzt zwischen den Außenzylinder (15) und den Innenzylinder (16).

7. Fahrzeugkarosserierahmen, aufweisend einen Montageaufbau nach einem der Ansprüche 1 bis 6.

8. Verfahren zum Montieren eines Fahrzeugkarosserierahmens nach Anspruch 7, aufweisend die Schritte von:
Montieren eines verbundenen Bauteils, insbesondere eines vorderen Endes des vorderen Aufhängungsteils (11), eines hinteren Endes des hinteren Aufhängungsteils (31) und / oder eines vorderen Endes der hinteren Stabilitätsstrebe (37) an einem Fahrzeugkarosserierahmen, insbesondere an einem Bodenabschnitt des Karosserierahmens, durch einen Montageaufbau nach einem der Ansprüche 1 bis 6, mit einem Befestigungsdrehmoment für die Montageschraube (21), festgelegt auf eine Größe zum Befestigen der verbundenen Bauteile an dem Fahrzeugkarosserierahmen,
Montieren der Fahrzeugkarosserie- Schwingungsdämpfungsvorrichtung (26) an der Montageschraube (21) zum Befestigen der verbundenen Bauteile an dem Bodenabschnitt des Karosserierahmens mit einem Befestigungsdrehmoment, das kleiner als das Befestigungsdrehmoment zu einer Zeit ist, wenn die verbundenen Bauteile befestigt werden.

## Revendications

1. Structure de montage d'un appareil d'amortissement de vibration de caisse de véhicule pour monter l'appareil d'amortissement de vibration de caisse de véhicule (26) sur une caisse de véhicule (1),
ledit appareil d'amortissement de vibration de caisse de véhicule (26) comprenant des moyens de génération de force d'amortissement hydrauliques (45) formés selon une forme allongée pour générer une force d'amortissement par rapport à la déformation dans sa direction longitudinale et une section de montage (42, 43) pour monter les deux extrémités des moyens de génération de force d'amortissement hydrauliques (45), en particulier sur une section inférieure (22) d'un châssis de véhicule,
ladite structure de montage comprenant une tête (24) d'un boulon de montage (21) pour monter un composant fixé (11, 13) sur le châssis (1), qui est formée avec une section étendue (24a) s'étendant sur un axe du boulon de montage (21) dans la direction opposée au châssis de véhicule, dans laquelle la section de montage (42, 43) est montée sur la section étendue (24a).

2. Structure de montage d'un appareil d'amortissement de vibration de caisse de véhicule selon la revendication 1, dans laquelle une vis mâle (27) est formée sur la section étendue (24a) et la section de montage (42, 43) de l'appareil d'amortissement de vibration de caisse de véhicule (26) est montée sur la vis mâle (27).

3. Structure de montage d'un appareil d'amortissement de vibration de caisse de véhicule selon la revendication 1 ou 2, dans laquelle le composant fixé est un système de suspension (11, 13), le boulon de montage (21) est prévu pour monter le système de suspension (11, 13) sur le châssis (1) et les deux extrémités de l'appareil d'amortissement de vibration de caisse de véhicule (26) sont montées sur les boulons de montage (21) prévus sur les deux extrémités dans le sens de la largeur du véhicule.

4. Structure de montage d'un appareil d'amortissement de vibration de caisse de véhicule selon l'une quelconque des revendications 1 à 3, dans laquelle le composant fixé est un élément de renforcement (37) faisant la liaison entre deux points du châssis, le boulon de montage (21) est prévu pour monter l'élément de renforcement (37) sur le châssis, et les deux extrémités de l'appareil d'amortissement de vibration de caisse de véhicule (26) sont montées sur les boulons de montage (21) prévus sur les deux extrémités dans le sens de la largeur du véhicule.

5. Structure de montage selon l'une quelconque des revendications 1 à 4, ayant un élément de montage (14) pour monter un composant fixé (11, 13, 37) sur le châssis du véhicule, ledit élément de montage (14) étant monté avec le composant fixé, dans laquelle le boulon de montage (21) pénètre et monte l'élément de montage (14) sur le châssis de véhicule (1), et dans laquelle ledit boulon de montage (21) comprend la section étendue (24a) sur un côté opposé au châssis de véhicule (1), ladite section étendue (24a) étant configurée pour monter un appareil d'amortissement de vibration de caisse de véhicule.

6. Structure de montage selon la revendication 5, dans laquelle ledit élément de montage (14) comprend un cylindre externe (15) monté avec le composant fixé, un cylindre interne (16) disposé à l'intérieur du cylindre externe (15) dans une position coaxiale avec le cylindre externe (15) et un tampon d'amortissement (17) intercalé entre le cylindre externe (15) et le cylindre interne (16).

7. Châssis de véhicule comprenant une structure de montage selon l'une quelconque des revendications 1 à 6.

8. Procédé pour assembler un châssis de véhicule selon la revendication 7, comprenant les étapes consistant à :
monter un composant fixé, en particulier une extrémité avant de l'élément de suspension avant (11), une extrémité arrière de l'élément de suspension arrière (31), et/ou une extrémité avant du renfort de stabilité arrière (37), sur un châssis de véhicule, en particulier, sur une section inférieure du châssis, grâce à une structure de montage selon l'une quelconque des revendications 1 à 6, avec un couple de serrage pour le boulon de montage (21) déterminé selon la quantité prévue pour fixer les composants fixés sur le châssis de véhicule,
monter l'appareil d'amortissement de vibration de caisse de véhicule (26) sur le boulon de montage (21) pour monter les composants fixés sur la section inférieure du châssis, avec un couple de serrage inférieur au couple de serrage qui existe au moment du montage des composants fixés.
